# EUROPÄISCHE PATENTSCHRIFT

(11) **EP 3 442 249 B1**
(45) Veröffentlichungstag und Bekanntmachung des Hinweises auf die Patenterteilung: **22.05.2019**
(21) Anmeldenummer: 17185122.3
(22) Anmeldetag: 07.08.2017
(51) Int. Cl.: H04W 12/06, H04W 12/08, G06Q 20/32, G06Q 20/36, G06Q 20/40, G06Q 20/34

(54) **VERFAHREN ZUR VERMEIDUNG DES MISSBRAUCHS VON IN MOBILEN ELEKTRONISCHEN GERÄTEN MITTELS EINER WALLET-ANWENDUNG VERWALTBAREN ELEKTRONISCHEN ZUGANGSBERECHTIGUNGEN, WELCHE AN DIE MOBILEN ELEKTRONISCHEN GERÄTE VON EINEM SERVER MITTELS JEWEILS EINES LINKS ZUM HERUNTERLADEN DER ZUGANGSBERECHTIGUNG ÜBERMITTELT WERDEN**
METHOD OF PREVENTING UNAUTHORISED USE OF ELECTRONIC ACCESS RIGHTS WHICH CAN BE MANAGED IN MOBILE ELECTRONIC DEVICES BY MEANS OF A WALLET APPLICATION, WHICH CAN BE TRANSFERRED TO THE MOBILE ELECTRONIC DEVICES FROM A SERVER BY MEANS OF A LINK FOR DOWNLOADING THE ACCESS RIGHTS
PROCÉDÉ DE PRÉVENTION D'UN USAGE ABUSIF DES DROITS D'ACCÈS ÉLECTRONIQUES GÉRABLES AU MOYEN D'UNE APPLICATION DE PORTE-FEUILLE ÉLECTRONIQUE DANS LES APPAREILS ÉLECTRONIQUES MOBILES, LESQUELS SONT TRANSMIS AUX APPAREILS ÉLECTRONIQUES MOBILES D'UN SERVEUR AU MOYEN D'UN LIEN RESPECTIF PERMETTANT LE TÉLÉCHARGEMENT DE DROIT D'ACCÈS

(43) Veröffentlichungstag der Anmeldung: 13.02.2019
(73) Patentinhaber: SKIDATA AG, 5083 Grödig/Salzburg (AT)
(72) Erfinder: Malmborg, Anders, 5020 Salzburg (AT); Jayaprakash, Vaijayanthi Mala, Bangalore-560037, Karnataka (IN)
(74) Vertreter: Karakatsanis, Georgios

(56) Entgegenhaltungen:
- US-A1- 2013 238 372
- US-A1- 2014 195 276
- US-A1- 2016 350 547

## Beschreibung

Die vorliegende Erfindung bezieht sich auf ein Verfahren zum Vermeiden des Missbrauchs von in mobilen elektronischen Geräten mittels einer Wallet-Anwendung verwaltbaren elektronischen Zugangsberechtigungen, welche an die mobilen elektronischen Geräte von einem Server mittels jeweils eines Links zum Herunterladen der Zugangsberechtigung übermittelt werden, gemäß dem Oberbegriff des Patentanspruchs 1.

Aus dem Stand der Technik ist bekannt, elektronische Zugangsberechtigungen beispielsweise mittels sogenannter Wallet-Anwendungen auf mobilen elektronischen Geräten, wie beispielsweise Smartphones, Tablets zu speichern und zu verwalten. Hierbei ist es möglich, beispielsweise mittels der IOS-App "Wallet" elektronische Zugangsberechtigungen an weitere mobile elektronische Geräte weiterzuleiten. Dies steigert zum einen den Komfort, für den Fall, dass eine berechtigte Person ein neues mobiles elektronisches Gerät verwenden möchte; andererseits können dadurch personenbezogene elektronische Zugangsberechtigungen "ausgeliehen" werden, wodurch ein Missbrauch dieser Zugangsberechtigungen vorliegt.

Aus der US 2016/350547 A1 geht ein Verfahren zum Vermeiden des Missbrauchs von mittels einer Interaktion mit einem Server erworbenen elektronischen Zugangsberechtigungen, welche vom Server an mobile elektronischen Geräte übermittelt werden, wobei beim Erwerb der elektronischen Zugangsberechtigung von einem Käufer Authentifizierungsdaten und ein mobiles elektronisches Gerät, an das die elektronische Zugangsberechtigung vom Server übermittelt wird, angegeben werden, wobei eine eineindeutige ID des mobilen elektronischen Gerätes an den Server übermittelt wird, welche mit einer ID der erworbenen Zugangsberechtigung verknüpft wird, wobei eine Übertragung der elektronischen Zugangsberechtigung von dem mobilen elektronischen Gerät auf ein weiteres mobiles elektronisches Gerät erst nach Eingabe der vom Käufer der Zugangsberechtigung angegebenen Authentifizierungsdaten mittels einer Interaktion mit dem Server erfolgt, wobei bei erfolgter Übertragung im Server die Zugangsberechtigungs-ID mit der ID des weiteren mobilen elektronischen Gerätes verknüpft wird und vom Server die auf dem mobilen elektronischen Gerät abgelegte Zugangsberechtigung als ungültig markiert wird.

Der vorliegenden Erfindung liegt die Aufgabe zugrunde, ein Verfahren zum Vermeiden des Missbrauchs von in mobilen elektronischen Geräten mittels einer Wallet- Anwendung verwaltbaren elektronischen Zugangsberechtigungen, welche an die mobilen elektronischen Geräte von einem Server mittels jeweils eines Links zum Herunterladen der Zugangsberechtigung übermittelt werden, anzugeben, durch dessen Durchführung ein Missbrauch einer Zugangsberechtigung bei gleichzeitiger Gewährleistung der Möglichkeit der Übertragung der elektronischen Zugangsberechtigung auf ein weiteres mobiles elektronisches Gerät einer berechtigten Person ausgeschlossen wird.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zum Vermeiden des Missbrauchs von in mobilen elektronischen Geräten mittels einer Wallet- Anwendung verwaltbaren elektronischen Zugangsberechtigungen, welche an die mobilen elektronischen Geräte von einem Server mittels jeweils eines Links zum Herunterladen der Zugangsberechtigung übermittelt werden vorgeschlagen, im Rahmen dessen eine elektronische Zugangsberechtigung mittels einer Interaktion mit einem Server erworben wird, wobei beim Erwerb der elektronischen Zugangsberechtigung von einem Käufer ein Passwort oder Authentifizierungsdaten und ein mobiles elektronisches Gerät, an das die elektronische Zugangsberechtigung vom Server mittels eines Links zum Herunterladen der Zugangsberechtigung übermittelt wird, angegeben werden.

Erfindungsgemäß wird beim Ausführen des Links zum Herunterladen der erworbenen Zugangsberechtigung eine eineindeutige ID des mobilen elektronischen Gerätes an den Server übermittelt, welche mit einer ID der erworbenen Zugangsberechtigung verknüpft wird, wobei eine Übertragung der elektronischen Zugangsberechtigung von dem ersten mobilen elektronischen Gerät auf ein weiteres mobiles elektronisches Gerät erst nach Eingabe des vom Käufer der Zugangsberechtigung angegebenen Passworts bzw. der vom Käufer der Zugangsberechtigung angegebenen Authentifizierungsdaten mittels einer Interaktion mit dem Server erfolgt, wobei bei erfolgter Übertragung im Server die Zugangsberechtigungs-ID mit der ID des weiteren mobilen elektronischen Gerätes verknüpft wird und vom Server die auf dem ersten mobilen elektronischen Gerät abgelegte Zugangsberechtigung als ungültig markiert wird.

Gemäß der Erfindung wird nach der Übermittlung des Links zum Herunterladen der Zugangsberechtigung an das mobile elektronische Gerät von einer Wallet-Anwendung, die auf dem mobilen Gerät installiert ist, der Link ausgeführt und zum Herunterladen der erworbenen Zugangsberechtigung eine eineindeutige ID des mobilen elektronischen Gerätes an den Server übermittelt, wobei im Server überprüft wird, ob eine ID der erworbenen Zugangsberechtigung mit der übermittelten eineindeutigen ID des mobilen elektronischen Gerätes verknüpft ist, wobei, wenn dies nicht der Fall ist, die Zugangsberechtigungs-ID und die eineindeutige ID des mobilen elektronischen Gerätes miteinander verknüpft werden und anschließend die elektronische Zugangsberechtigung heruntergeladen wird.

Für den Fall, dass die elektronische Zugangsberechtigung von einem mobilen elektronischen Gerät auf ein weiteres mobiles elektronisches Gerät übertragen werden soll, wird von der Wallet-Anwendung des mobilen elektronischen Gerätes, , mit dessen eineindeutiger ID die Zugangsberechtigungs-ID verknüpft ist, ein Link zum Herunterladen der Zugangsberechtigung an das weitere mobile elektronische Gerät übermittelt, wobei die Wallet-Anwendung des weiteren mobilen elektronischen Gerätes den Link ausführt und eine eineindeutige ID des weiteren mobilen elektronischen Gerätes an den Server übermittelt.

Erfindungsgemäß wird im Server überprüft, ob eine Verknüpfung der Zugangsberechtigungs-ID mit einer eineindeutigen ID eines anderen mobilen elektronischen Gerätes existiert, wobei, wenn dies der Fall ist, vom Server ein Link auf das weitere mobile elektronische Gerät übermittelt wird, dessen Ausführung von der Wallet-Anwendung zu einer Eingabemaske für das vom Käufer der Zugangsberechtigung angegebene Passwort bzw. die vom Käufer der Zugangsberechtigung angegebenen Authentifizierungsdaten führt, wobei bei gültigem Passwort oder bei gültigen Authentifizierungsdaten, im Server die Zugangsberechtigungs-ID mit der ID des weiteren mobilen elektronischen Gerätes verknüpft wird und die elektronische Zugangsberechtigung auf das weitere mobile elektronische Gerät heruntergeladen wird.

Anschließend wird vom Server die auf dem ersten mobilen elektronischen Gerät abgelegte Zugangsberechtigung vorzugsweise mittels einer Push-Nachricht an die Wallet-Anwendung als ungültig markiert, wobei die Verknüpfung der ID des ersten mobilen elektronischen Gerätes mit der elektronischen Zugangsberechtigung gelöscht wird und die entsprechenden Daten im Server gespeichert werden.

Durch die erfindungsgemäß Konzeption wird ein Verfahren zum Vermeiden des Missbrauchs von in mobilen elektronischen Geräten mittels einer Wallet- Anwendung verwaltbaren elektronischen Zugangsberechtigungen, welche an die mobilen elektronischen Geräte von einem Server mittels jeweils eines Links zum Herunterladen der Zugangsberechtigung übermittelt werden zur Verfügung gestellt, durch dessen Durchführung gewährleistet wird, dass eine Zugangsberechtigung nur dann auf ein weiteres mobiles elektronisches Gerät übertragen werden kann, wenn dies ein mobiles elektronisches Gerät einer berechtigten Person ist.

Im Rahmen einer Weiterbildung der Erfindung wird, wenn eine Zugangsberechtigung von einem mobilen elektronischen Gerät auf ein weiteres mobiles elektronisches Gerät übertragen werden soll, d.h., wenn die Zugangsberechtigungs-ID bereits mit einer eineindeutigen ID eines mobilen elektronischen Gerätes verknüpft ist, anhand der Anzahl der erfolgten Verknüpfungen der Zugangsberechtigungs-ID mit eineindeutigen IDs mobiler elektronischer Geräte überprüft, wie oft die Zugangsberechtigung bereits übertragen worden ist, wobei, wenn die Anzahl der erfolgten Übertragungen einen vorgegebenen Schwellenwert erreicht hat, keine weitere Übertragung möglich ist.

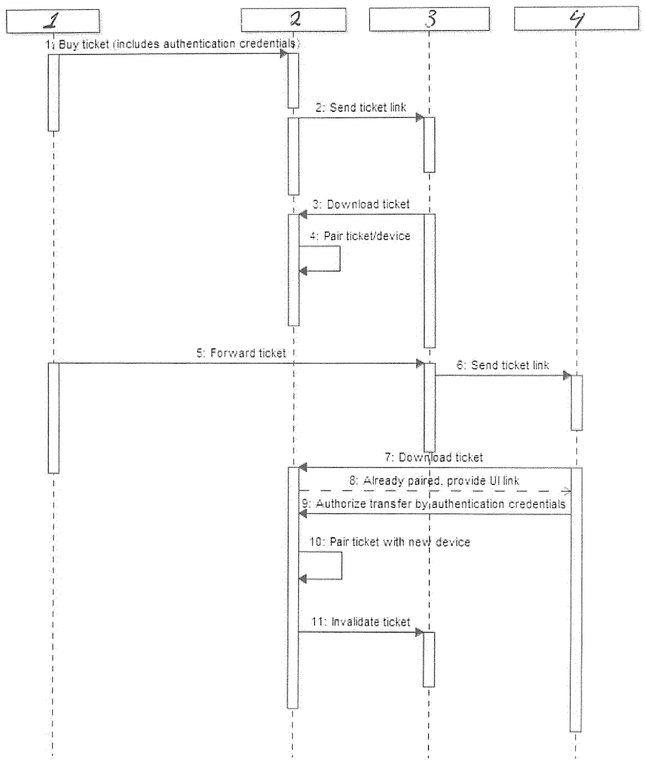

Die Erfindung wird im Folgenden anhand der beigefügten Figur, welche ein Sequenzdiagramm zur Veranschaulichung der Hauptmerkmale des erfindungsgemäßen Verfahrens darstellt, beispielhaft näher erläutert.

Bezugnehmend auf die beigefügte Figur wird zu Beginn des Verfahrens von einem Käufer 1 mittels einer Interaktion mit einem Server 2 eine elektronische Zugangsberechtigung erworben (Schritt 1), wobei beim Erwerb der elektronischen Zugangsberechtigung vom Käufer ein Passwort oder Authentifizierungsdaten angegeben werden. Anschließend (Schritt 2) wird die elektronische Zugangsberechtigung vom Server 1 auf ein beim Erwerb der Zugangsberechtigung angegebenes mobiles elektronisches Gerät 3 mittels eines Links zum Herunterladen der Zugangsberechtigung übermittelt, wobei eine Wallet- Anwendung, die auf dem mobilen Gerät 3 installiert ist, den Link ausführt und zum Herunterladen der erworbenen Zugangsberechtigung eine eineindeutige ID des mobilen elektronischen Gerätes an den Server 2 übermittelt (Schritt 3), wobei im Server 2 überprüft wird, ob eine ID der erworbenen Zugangsberechtigung mit der übermittelten eineindeutigen ID des mobilen elektronischen Gerätes 3 verknüpft ist, wobei, wenn dies nicht der Fall ist, die Zugangsberechtigungs-ID und die eineindeutige ID des mobilen elektronischen Gerätes 3 miteinander verknüpft werden (Schritt 4) und anschließend die elektronische Zugangsberechtigung heruntergeladen wird.

Wenn die elektronische Zugangsberechtigung von einem mobilen elektronischen Gerät 3 auf ein weiteres mobiles elektronisches Gerät 4 übertragen werden soll, d.h., wenn die Zugangsberechtigungs-ID bereits mit einer eineindeutigen ID eines mobilen elektronischen Gerätes 3 verknüpft ist, wird nach Initiierung des Vorgangs vom Besitzer des mobilen elektronischen Gerätes 3 (Schritt 5), mit dessen eineindeutiger ID die Zugangsberechtigungs-ID verknüpft ist, von der Wallet-Anwendung des mobilen elektronischen Gerätes 3, mit dessen eineindeutiger ID die Zugangsberechtigungs-ID verknüpft ist, ein Link zum Herunterladen der Zugangsberechtigung an das weitere mobile elektronische Gerät 4 übermittelt (Schritt 6), wobei die Wallet-Anwendung des weiteren mobilen elektronischen Gerätes 4 den Link ausführt (Schritt 7) und eine eineindeutige ID des weiteren mobilen elektronischen Gerätes 4 an den Server 2 übermittelt.

Anschließend wird im Server 2 überprüft, ob eine Verknüpfung der ID der zu übertragenden Zugangsberechtigung mit einer eineindeutigen ID eines anderen mobilen elektronischen Gerätes existiert, wobei, wenn dies der Fall ist, vom Server 2 ein Link auf das weitere mobile elektronische Gerät 4 übermittelt wird (Schritt 8), dessen Ausführung von der Wallet-Anwendung zu einer Eingabemaske für das vom Käufer der Zugangsberechtigung angegebene Passwort bzw. die vom Käufer der Zugangsberechtigung angegebenen Authentifizierungsdaten führt (Schritt 9), wobei bei gültigem Passwort oder bei gültigen Authentifizierungsdaten, im Server 2 die Zugangsberechtigungs-ID mit der ID des weiteren mobilen elektronischen Gerätes 4 verknüpft wird (Schritt 10) und die elektronische Zugangsberechtigung auf das weitere mobile elektronische Gerät 4 heruntergeladen wird.

Anschließend wird vom Server 2 die auf dem ersten mobilen elektronischen Gerät 3 abgelegte Zugangsberechtigung vorzugsweise mittels einer Push-Nachricht an die Wallet-Anwendung als ungültig markiert (Schritt 11).

## Patentansprüche

1. Verfahren zum Vermeiden des Missbrauchs von in mobilen elektronischen Geräten mittels einer Wallet- Anwendung verwaltbaren elektronischen Zugangsberechtigungen, welche an die mobilen elektronischen Geräte von einem Server mittels jeweils eines Links zum Herunterladen der Zugangsberechtigung übermittelt werden, wobei eine elektronische Zugangsberechtigung mittels einer Interaktion mit einem dem Server (2) erworben wird, wobei beim Erwerb der elektronischen Zugangsberechtigung von einem Käufer (1) ein Passwort oder Authentifizierungsdaten und ein mobiles elektronisches Gerät, an das die elektronische Zugangsberechtigung vom Server (2) mittels eines Links zum Herunterladen der Zugangsberechtigung übermittelt wird, angegeben werden, wobei beim Ausführen des Links zum Herunterladen der erworbenen Zugangsberechtigung eine eineindeutige ID des mobilen elektronischen Gerätes (3) an den Server (2) übermittelt wird, welche mit einer ID der erworbenen Zugangsberechtigung verknüpft wird, wobei eine Übertragung der elektronischen Zugangsberechtigung von dem mobilen elektronischen Gerät (3) auf ein weiteres mobiles elektronisches Gerät (4) erst nach Eingabe des vom Käufer der Zugangsberechtigung angegebenen Passworts bzw. der vom Käufer der Zugangsberechtigung angegebenen Authentifizierungsdaten mittels einer Interaktion mit dem Server (2) erfolgt, wobei bei erfolgter Übertragung im Server (2) die Zugangsberechtigungs-ID mit der ID des weiteren mobilen elektronischen Gerätes (4) verknüpft wird und vom Server (2) die auf dem mobilen elektronischen Gerät (3) abgelegte Zugangsberechtigung als ungültig markiert wird, wobei nach der Übermittlung des Links zum Herunterladen der Zugangsberechtigung an das mobile elektronische Gerät (3) die
Wallet- Anwendung, die auf dem mobilen Gerät (3) installiert ist, den Link ausführt und zum Herunterladen der erworbenen Zugangsberechtigung eine eineindeutige ID des mobilen elektronischen Gerätes an den Server (2) übermittelt, wobei im Server (2) überprüft wird, ob eine ID der erworbenen Zugangsberechtigung mit der übermittelten eineindeutigen ID des mobilen elektronischen Gerätes (3) verknüpft ist, wobei, wenn dies nicht der Fall ist, die Zugangsberechtigungs-ID und die eineindeutige ID des mobilen elektronischen Gerätes (3) miteinander verknüpft werden und anschließend die elektronische Zugangsberechtigung heruntergeladen wird und wobei, wenn eine elektronische Zugangsberechtigung von einem mobilen elektronischen Gerät (3) auf ein weiteres mobiles elektronisches Gerät (4) übertragen werden soll, nach Initiierung des Vorgangs vom Besitzer des mobilen elektronischen Gerätes (3), mit dessen eineindeutiger ID die Zugangsberechtigungs-ID verknüpft ist, von der Wallet-Anwendung des mobilen elektronischen Gerätes (3), mit dessen eineindeutiger ID die Zugangsberechtigungs-ID verknüpft ist, ein Link zum Herunterladen der Zugangsberechtigung an das weitere mobile elektronische Gerät (4) übermittelt wird, wobei die Wallet-Anwendung des weiteren mobilen elektronischen Gerätes (4) den Link ausführt und eine eineindeutige ID des weiteren mobilen elektronischen Gerätes (4) an den Server (2) übermittelt, wobei anschließend im Server (2) überprüft wird, ob eine Verknüpfung der ID der zu übertragenden Zugangsberechtigung mit einer eineindeutigen ID eines anderen mobilen elektronischen Gerätes existiert, wobei, wenn dies der Fall ist, vom Server (2) ein Link auf das weitere mobile elektronische Gerät (4) übermittelt wird, dessen Ausführung von der Wallet-Anwendung zu einer Eingabemaske für das vom Käufer der Zugangsberechtigung angegebene Passwort bzw. die vom Käufer der Zugangsberechtigung angegebenen Authentifizierungsdaten führt, wobei bei gültigem Passwort oder bei gültigen Authentifizierungsdaten, im Server (2) die Zugangsberechtigungs-ID mit der eineindeutigen ID des weiteren mobilen elektronischen Gerätes (4) verknüpft wird und die elektronische Zugangsberechtigung auf das weitere mobile elektronische Gerät (4) heruntergeladen wird und die auf dem mobilen elektronischem Gerät (3) abgelegte Zugangsberechtigung als ungültig markiert wird, wobei die Verknüpfung der eineindeutigen ID des mobilen elektronischen Gerätes (3) mit der elektronischen Zugangsberechtigung gelöscht wird und die entsprechenden Daten im Server (2) gespeichert werden.

2. Verfahren zum Vermeiden des Missbrauchs von in mobilen elektronischen Geräten mittels einer Wallet- Anwendung verwaltbaren elektronischen Zugangsberechtigungen, welche an die mobilen elektronischen Geräte von einem Server mittels jeweils eines Links zum Herunterladen der Zugangsberechtigung übermittelt werden, nach Anspruch 1, **dadurch gekennzeichnet, dass** wenn eine Zugangsberechtigung von einem mobilen elektronischen Gerät (3) auf ein weiteres mobiles elektronisches Gerät (4) übertragen werden soll, d.h., wenn die Zugangsberechtigungs-ID bereits mit einer eineindeutigen ID eines mobilen elektronischen Gerätes (3) verknüpft ist, anhand der Anzahl der erfolgten Verknüpfungen der Zugangsberechtigungs-ID mit eineindeutigen IDs mobiler elektronischer Geräte überprüft wird, wie oft die Zugangsberechtigung bereits übertragen worden ist, wobei, wenn die Anzahl der erfolgten Übertragungen einen vorgegebenen Schwellenwert erreicht hat, keine weitere Übertragung möglich ist.

3. Verfahren zum Vermeiden des Missbrauchs von in mobilen elektronischen Geräten mittels einer Wallet- Anwendung verwaltbaren elektronischen Zugangsberechtigungen, welche an die mobilen elektronischen Geräte von einem Server mittels jeweils eines Links zum Herunterladen der Zugangsberechtigung übermittelt werden, nach Anspruch 1 oder 2, **dadurch gekennzeichnet, dass** bei erfolgter Übertragung der elektronischen Zugangsberechtigung vom mobilen elektronischen Gerät (3) auf ein weiteres mobiles elektronisches Gerät (4) vom Server (2) die auf dem mobilen elektronischen Gerät (3) abgelegte Zugangsberechtigung mittels einer Push-Nachricht als ungültig markiert wird.

## Claims

1. A method for preventing unauthorised use of electronic access authorizations that can be managed in mobile electronic devices by means of a wallet application, which are transferred to the mobile electronic devices from a server by means of a link for downloading the respective access authorization, wherein an electronic access authorization is acquired by means of an interaction with the server (2), wherein during the purchase of the electronic access authorization a password or authentication data and a mobile electronic device, to which the electronic access authorization is transferred from the server (2) by means of a link for downloading the access authorization, is indicated by a purchaser (1), wherein a unique ID of the mobile electronic device (3) is transferred to the server (2) during the execution of the link for downloading the acquired access authorization, said unique device ID being associated with an ID of the acquired access authorization, wherein a transfer of the electronic access authorization from the mobile electronic device (3) to another mobile electronic device (4) is only executed after the input by means of an interaction with the server (2) of the password indicated by the purchaser of the access authorization and/or of the authentication data indicated by the purchaser of the access authorization, wherein, upon the completed transfer, the access authorization ID is associated with the ID of the other mobile electronic device (4) in the server (2) and the access authorization on file for the electronic mobile device (3) is marked invalid by the server (2), wherein, after the completed transfer to the mobile electronic device (3) of the link for downloading the access authorization, the wallet application installed on the mobile device (3) executes the link and transfers a unique ID of the mobile electronic device to the server (2) for downloading the acquired access authorization, wherein the server (2) reviews whether an ID of the acquired access authorization is associated with the transferred unique ID of the mobile electronic device (3), wherein, if this is not the case, the access authorization ID and the unique ID of the mobile electronic device (3) are associated with each other and the electronic access authorization subsequently is downloaded and wherein, if an electronic access authorization is intended to be transferred from a mobile electronic device (3) to another mobile electronic device (4), the wallet application of the mobile electronic device (3), whose unique ID is associated with the access authorization ID, transfers a link for downloading the access authorization to the other mobile electronic device (4) after an initiation of this process by the owner of the mobile electronic device (3), whose unique ID is associated with the access authorization ID, wherein the wallet application of the other mobile electronic device (4) executes the link and transfers a unique ID of the other mobile electronic device (4) to the server (2), wherein the server (2) subsequently reviews whether an association is in place between the ID of the access authorization to be transferred and a unique ID of another mobile electronic device, wherein, if this is the case, the server (2) transfers a link to the other mobile electronic device (4), the execution of said link resulting in an input screen provided by the wallet application for entering the password indicated by the purchaser of the access authorization and/or the authentication data indicated by the purchaser of the access authorization, wherein, upon entry of a valid password or valid authentication data, the access authorization ID is associated with the unique ID of the other mobile electronic device (4) in the server (2) and the electronic access authorization is downloaded to the other electronic device (4) and the access authorization filed on the mobile electronic device (3) is marked invalid, wherein the association of the unique ID of the mobile electronic device (3) with the electronic access authorization is deleted and the respective data are stored in the server (2).

2. The method of preventing unauthorised use of electronic access authorizations that can be managed in mobile electronic devices by means of a wallet application, which are transferred to the mobile electronic devices from a server by means of a link for downloading the respective access authorization, according to Claim 1, **characterised in that**, if an access authorization is intended to be transferred from a mobile electronic device (3) to another mobile electronic device (4), i.e. if the access authorization ID already is associated with a unique ID of a mobile electronic device (3), a review is conducted on the basis of the number of completed associations of the access authorization ID with unique IDs of mobile electronic devices, how often the access authorization already has been transferred, wherein, if the number of completed transfers has reached a defined threshold, no further transfer is possible.

3. The method of preventing unauthorised use of electronic access authorizations that can be managed in mobile electronic devices by means of a wallet application, which are transferred to the mobile electronic devices from a server by means of a link for downloading the respective access authorization, according to Claim 1 or 2, **characterised in that**, in the case of a completed transfer of the electronic access authorization from the mobile electronic device (3) to another mobile electronic device (4), the access authorization filed on the mobile electronic device (3) is marked invalid by the server (2) by means of a push message.

## Revendications

1. Procédé destiné à éviter l'usage abusif d'autorisations d'accès électroniques gérables dans des appareils électroniques mobiles au moyen d'une application de portefeuille, lesquelles sont transmises aux appareils électroniques mobiles par un serveur au moyen respectivement d'un lien pour télécharger l'autorisation d'accès, une autorisation d'accès électronique étant acquise au moyen d'une interaction avec le serveur (2), lors de l'acquisition de l'autorisation d'accès électronique par un acheteur (1), un mot de passe ou des données d'authentification et un appareil électronique mobile, auquel est transmise l'autorisation d'accès électronique par le serveur (2) au moyen d'un lien pour télécharger l'autorisation d'accès, étant indiqués, lors de l'exécution du lien pour télécharger l'autorisation d'accès acquise, une identification (ID) biunivoque de l'appareil électronique mobile (3) étant transmise au serveur (2), laquelle est associée à une ID de l'autorisation d'accès acquise, une transmission de l'autorisation d'accès électronique de l'appareil électronique mobile (3) à un autre appareil électronique mobile (4) n'ayant lieu qu'après introduction du mot de passe indiqué par l'acheteur de l'autorisation d'accès ou de données d'authentification indiquées par l'acheteur de l'autorisation d'accès au moyen d'une interaction avec le serveur (2), lors de la transmission réussie dans le serveur (2), l'ID d'autorisation d'accès étant associée à l'ID de l'autre appareil électronique mobile (4) et l'autorisation d'accès déposée sur l'appareil électronique mobile (3) étant marquée comme non valide par le serveur (2), après la transmission du lien pour télécharger l'autorisation d'accès sur l'appareil électronique mobile (3), l'application de portefeuille, qui est installée sur l'appareil mobile (3), exécutant le lien et transmettant une ID biunivoque de l'appareil électronique mobile au serveur (2) pour télécharger l'autorisation d'accès acquise, un contrôle ayant lieu dans le serveur (2) pour voir si une ID de l'autorisation d'accès acquise est associée à l'ID biunivoque transmise de l'appareil électronique mobile (3), si cela n'est pas le cas, l'ID d'autorisation d'accès et l'ID biunivoque de l'appareil électronique mobile (3) étant associées l'une à l'autre et l'autorisation d'accès électronique étant ensuite téléchargée et si une autorisation d'accès électronique doit être transmise par un appareil électronique mobile (3) à un autre appareil électronique mobile (4), après lancement de l'opération par le possesseur de l'appareil électronique mobile (3), l'ID d'autorisation d'accès étant associée à l'ID biunivoque de celui-ci par l'application de portefeuille de l'appareil électronique mobile (3), un lien étant transmis pour télécharger l'autorisation d'accès à l'autre appareil électronique mobile (4), l'ID d'autorisation d'accès étant associée à l'ID biunivoque de celui-ci, l'application de portefeuille de l'autre appareil électronique mobile (4) exécutant le lien et transmettant une ID biunivoque de l'autre appareil électronique mobile (4) au serveur (2), un contrôle ayant lieu ensuite dans le serveur (2) pour voir si une association de l'ID de l'autorisation d'accès à transmettre à une ID biunivoque d'un autre appareil électronique mobile existe, si cela est le cas, un lien étant transmis par le serveur (2) à l'autre appareil électronique mobile (4), dont l'exécution par l'application de portefeuille conduit à un masque d'introduction pour le mot de passe indiqué par l'acheteur de l'autorisation d'accès ou les données d'authentification indiquées par l'acheteur de l'autorisation d'accès, en cas de mot de passe valide ou en cas de données d'authentification valides, l'ID d'autorisation d'accès étant associée dans le serveur (2) à l'ID biunivoque de l'autre appareil électronique mobile (4) et l'autorisation d'accès électronique étant téléchargée sur l'autre appareil électronique mobile (4) et l'autorisation d'accès déposée sur l'appareil électronique mobile (3) étant marquée comme non valide, l'association de l'ID biunivoque de l'appareil électronique mobile (3) étant effacée avec l'autorisation d'accès électronique et les données correspondantes étant mémorisées dans le serveur (2).

2. Procédé destiné à éviter l'usage abusif d'autorisations d'accès électroniques gérables dans des appareils électroniques mobiles au moyen d'une application de portefeuille, lesquelles sont transmises aux appareils électroniques mobiles par un serveur au moyen respectivement d'un lien pour télécharger l'autorisation d'accès, selon la revendication 1, **caractérisé en ce que** si une autorisation d'accès doit être transmise par un appareil électronique mobile (3) à un autre appareil électronique mobile (4), c'est-à-dire, si l'ID d'autorisation d'accès est déjà associée à une ID biunivoque d'un appareil électronique mobile (3), il est vérifié à l'aide du nombre des associations réussies de l'ID d'autorisation d'accès avec des ID biunivoques d'appareils électroniques mobiles combien de fois l'autorisation d'accès a déjà été transmise, aucune autre transmission n'étant possible, lorsque le nombre des transmissions réussies a atteint une valeur seuil prédéfinie.

3. Procédé destiné à éviter l'usage abusif d'autorisations d'accès électroniques gérables dans des appareils électroniques mobiles au moyen d'une application de portefeuille, lesquelles sont transmises aux appareils électroniques mobiles par un serveur au moyen respectivement d'un lien pour télécharger l'autorisation d'accès, selon la revendication 1 ou 2, **caractérisé en ce que** l'autorisation d'accès déposée sur l'appareil électronique mobile (3) est marquée comme non valide par le serveur (2) au moyen d'un message d'empilement lors d'une transmission réussie de l'autorisation d'accès électronique de l'appareil électronique mobile (3) à un autre appareil électronique mobile (4).
